# EUROPÄISCHE PATENTSCHRIFT

(11) **EP 1 575 159 B1**
(45) Veröffentlichungstag und Bekanntmachung des Hinweises auf die Patenterteilung: **26.11.2008**
(21) Anmeldenummer: 05103944.4
(22) Anmeldetag: 12.12.1996
(51) Int. Cl.: H02P 9/14

(54) **Vorrichtung und Verfahren zur Erzeugung einer geregelten Spannung**
Method and device for generating a regulated voltage
Procédé et dispositif pour la génération d'une tension reglée

(30) Priorität: 26.03.1996 DE 19611908
(43) Veröffentlichungstag der Anmeldung: 14.09.2005
(62) Teilanmeldung aus: 96946191.2
(73) Patentinhaber: ROBERT BOSCH GMBH, 70442 Stuttgart (DE)
(72) Erfinder: Mittag, Rainer, 70806, Kornwestheim (DE); Suelzle, Helmut, 71691, Freiberg (DE); Meyer, Friedhelm, 75428, Illingen (DE); Kohl, Walter, 74389, Cleebronn (DE)

(56) Entgegenhaltungen:
- US-A- 4 079 306
- US-A- 4 275 344

## Beschreibung

### Stand der Technik

Die Erfindung betrifft eine Vorrichtung und ein Verfahren zur Erzeugung einer geregelten Spannung nach der Gattung des Hauptanspruchs. Eine solche Vorrichtung wird beispielsweise in Kraftfahrzeugen eingesetzt, wobei dann der Generator vom Motor beziehungsweise der Brennkraftmaschine des Fahrzeuges angetrieben wird.

Zur Erzeugung einer geregelten Spannung, beispielsweise zur Energieversorgung in einem Kraftfahrzeug werden üblicherweise Generatoren eingesetzt, die vom Fahrzeugmotor über einen Keilriemen angetrieben werden. Diese Generatoren sind üblicherweise Drehstromgeneratoren mit einer Erregerwicklung, die vom Erregerstrom durchflossen wird, wobei ein Spannungsregler mit dem Generator in Verbindung steht und den Erregerstrom so regelt, daß die Ausgangsspannung des Generators im wesentlichen konstant ist und etwas höher ist als die Nennspannung einer vom Generator zu ladenden Batterie. Bei herkömmlichen Generatoren wird der Erregerstrom über die Erregerdioden ausgekoppelt und vom Generator selbst erzeugt. Die Zuführung des Erregerstroms erfolgt über eine Klemme D+, die sowohl am Generator als auch am Spannungsregler vorhanden ist.

Es sind jedoch auch Generator-Spannungsregler-Systeme bekannt, bei denen keine Erregerdioden benötigt werden, da die Erregerwicklung direkt an die Batterie angeschlossen wird. Ein solcher Generator ohne D+- Anschluss ist beispielsweise aus der europäischen Patentanmeldung EP-A2 0 401 758 bekannt. Die Regelung der Höhe der Ausgangsspannung des Generators erfolgt bei diesem bekannten Generator ebenfalls mit Hilfe eines Spannungsreglers, der über einen als Schaltelement wirkenden Transistor den Stromfluss durch die Erregerwicklung so beeinflusst, dass die Ausgangsspannung des Generators im wesentlichen konstant ist. Beim bekannten Generator-Spannungsregler-System werden keine gesonderten Maßnahmen getroffen, die eine schnelle Erregung des Generators gewährleisten. Aus der EP-A2 0 401 758 ist lediglich bekannt, bei kleinen Generatordrehzahlen, wenn die Ausgangsspannung des Generators nicht ausreicht, um die Batterie zu laden, eine zusätzliche Verbindung zwischen der Erregerwicklung und Masse herzustellen und dadurch den Erregerstrom zu erhöhen.

Aus der US 4,079,306 ist ein gattungsgleiches Generator-Spannungsreglersystem bekannt, bei dem eine Starterkennung erfolgt, indem der Verlauf der Bordnetzspannung ausgewertet wird und bei erkanntem Start die die Erregerwicklung mit dem spannungsführenden Anschluss des Spannungsreglers verbunden wird.

### Vorteile der Erfindung

Die erfindungsgemäße Vorrichtung mit den Merkmalen des Anspruchs 1 hat demgegenüber den Vorteil, dass Generatoren einschließlich der zugehörigen Spannungsregler, eingesetzt werden können, die lediglich über zwei Anschlüsse miteinander verbunden sind und keinen D+-, L- oder KL15-Anschluß aufweisen und dass dennoch sichergestellt wird, dass unmittelbar nach der Inbetriebnahme des Generators, also unmittelbar nach dem Start der Brennkraftmaschine, eine schnelle Erregung des Generators erfolgt. Erzielt wird dieser Vorteil, indem dem Spannungsregler Informationen zugeführt werden, die erkennen lassen, dass ein Start erfolgt. Es wird dann sofort eine Verbindung vom Plus-Anschluss des Generators über die Erregerwicklung nach Masse hergestellt, über die ein Vorerregungsstrom fließt, der ein schnelles Anlaufen der Erregung des Generators sicherstellt.

In vorteilhaften Weise wird der an sich bekannte Verlauf der Bordnetzspannung während des Startvorgangs ausgewertet und aus diesem charakteristischen Verlauf ein Signal gebildet, das den Start anzeigt und den Erregerstrom einschaltet.

Die Starterkennung kann auch anhand verschiedener Lösungen realisierbar sein. So kann beispielsweise eine Starterkennung erfolgen, indem die während des Startvorgangs beim Betrieb eines Verbrennungsmotors auftretenden Beschleunigungen mit Hilfe eines Beschleunigungssensors ermittelt werden und als Starterkennungssignale dienen. Bei einer anderen vorteilhaften Lösung wird die Amplitude der über den Restmagnetismus des Generators induzierten Phasenspannung zur Starterkennung ausgewertet und die Erregung nach Erreichen eines Grenzwertes gestartet. Bei einer weiteren vorteilhaften Lösung wird die Frequenz der über den Restmagnetismus induzierten Phasenspannung zur Starterkennung ausgewertet. Es kann dann ab einer vorgegebenen Drehzahl die Erregung gestartet werden.

Bei allen Beispielen der Starterkennung kann der Übergang von der Vorerregung in den normalen Regelbetrieb bei Erreichen wenigstens eines vorgebbaren Kriteriums erfolgen. Ein solches Kriterium kann darin bestehen, dass die Phasenspannung ausgewertet wird, wobei aus dem Phasensignal ein Drehzahlsignal gewonnen werden kann und dieses mit einem vorgebbaren Drehzahl-Schwellwert verglichen wird und bei Erreichen dieses Schwellwertes der Übergang in den normalen Regelbetrieb erfolgt Werden weitere zur Regelung benötigte Größen wie Batteriespannung oder Batterietemperatur im Regler simuliert, werden auch bei erweiterte Spannungsreglern keine zusätzlichen Klemmen benötigt Eine solche Simulation kann beispielsweise fahrzeugtypabhängig erfolgen. Sie eignet sich vorzugsweise in Verbindung mit einer sogenannten "Bandende-Programmierung" und erfolgt also nicht bei der Reglerherstellung, sondern erst am Ende der Gesamtsystemfertigung und wird dann gegebenenfalls für den Anwendungszweck abgeglichen.

Durch Auswertung des im Regler vorhanden DF-Signales, das das Tastverhältnis EIN/AUS des Spannungsreglers anzeigt, kann ein Maß für die Höhe des Erregerstromes gewonnen werden und damit die Generatorauslastung abgeschätzt werden. Diese Information steht in vorteilhafter Weise im Regler bereit und muss nicht über zusätzliche Eingangsklemmen zugeführt werden. Die Auswertung des DF-Signales erlaubt eine Erkennung einer Spannungsreserve und bietet zusätzlich die Möglichkeit, die Zuschaltung von weiteren Verbrauchern an das Vorhandensein einer Spannungsreserve zu knüpfen.

Falls durch Störungseinfluss eine irrtümliche Erregerstromeinschaltung bei stehendem Motor ausgelöst wird, kann dies durch Auswertung des Phasensignales erkannt werden und es kann in vorteilhafter Weise ein Zeitglied nach einer gewissen Zeitspanne von einigen Sekunden aktiviert werden, das seinerseits den Erregerstrom abschaltet. Damit kann eine ungewollte Batterieentladung vermieden werden.

Da gegenüber herkömmlichen Generatoren weniger Anschlüsse und damit auch weniger Verbindungsleitungen erforderlich sind und überhaupt keine Steuerleitungen vorhanden sind, ist eine Erhöhung der Störsicherheit gewährleistet und das System wird gegenüber elektromagnetischen Störungen unempfindlicher.

### Zeichnung

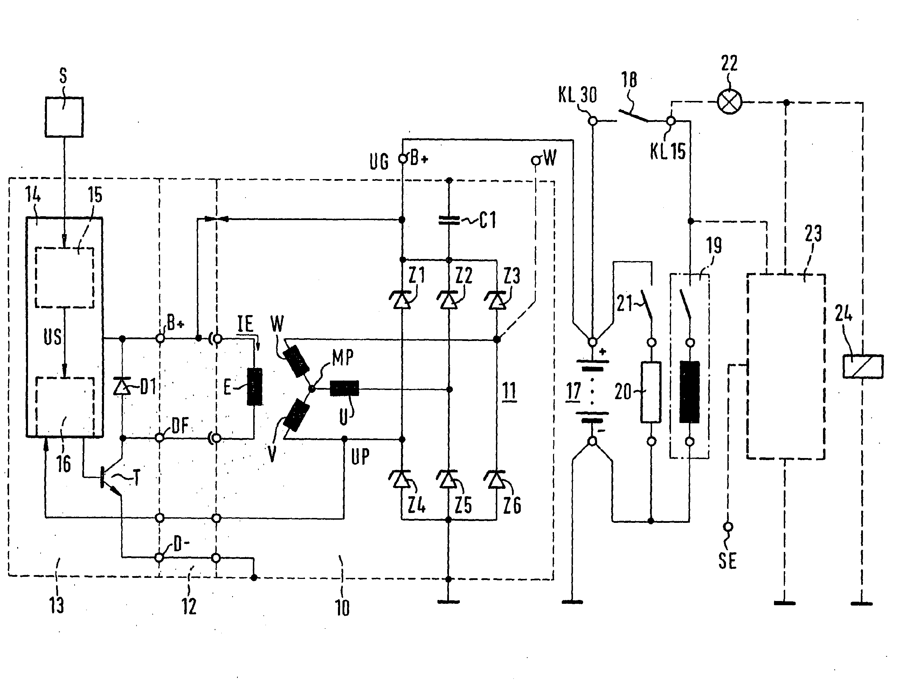

Ein Ausführungsbeispiel der Erfindung ist in der Zeichnung dargestellt und wird in der nachfolgenden Beschreibung näher erläutert.

### Beschreibung

In der Figur sind die wesentlichsten Bestandteile eines Spannungsversorgungssystems in einem Kraftfahrzeug dargestellt. Die einzelnen Bestandteile sind ein Drehstromgenerator 10, der von einer nicht dargestellten Brennkraftmaschine angetrieben wird und die Phasenwicklungen U, V, W umfaßt, die in einem gemeinsamen Punkt MP miteinander verbunden sind. Am Ausgang der Phasenwicklungen entsteht bei sich drehendem Generator die Phasenspannung UP. Die Phasenwicklungen sind mit der Gleichrichterbrücke 11 verbunden, die die Zenerdioden Z1 bis Z6 umfaßt. Die Gleichrichterbrücke 11 liegt einerseits auf Masse und führt andererseits zum Anschluß B+, an der die vom Generator abgegebene, gleichgerichtete Ausgangsspannung UG entsteht.

Die Erregerwicklung E des Generators 10 ist über den Bürstenhalter 12 mit den Anschlüssen B+ und DF des Spannungsreglers 13 verbunden. Zwischen dem Anschluß DF und dem Anschluß D- des Spannungsreglers 13, der über den Bürstenhalter auf Masse geführt ist, liegt der Schalttransistor T1, über den der Erregerstrom IE durch die Erregerwicklung E geregelt werden kann. Die Basis des Schalttransistors T ist mit einem Schaltungsblock 14 verbunden, in dem Sensorsignale ausgewertet werden, die erkennen lassen, ob sich der Generator dreht beziehungsweise ob ein Start der Brennkraftmaschine vorliegt. Der Auswerteblock, in dem diese Signale ausgewertet beziehungsweise bereitgestellt werden, ist mit 15 bezeichnet. Ein weiterer Schaltungsblock 16 dient zur Ausgabe der Sensorsignale, die mit US bezeichnet sind. Dem Schaltungsblock 16 wird auch noch die Phasenspannung UP zugeführt, die beispielsweise an der Phasenwicklung V abgegriffen wird und über entsprechende Anschlüsse am Bürstenhalter 12 beziehungsweise Spannungsregler 13 weitergeleitet werden. Der Schaltungsblock 14 übernimmt insgesamt die Ansteuerung des Transistors T. Der Anschluß B+ des Reglers 13 beziehungsweise der zugehörige Anschluß der Erregerwicklung E sind gemeinsam an die Generatorklemme B+ angeschlossen, wobei der Anschluß innerhalb des Generators 10 über den Bürstenhalter 12 erfolgen kann. Zwischen dem Anschluß B+ des Spannungsreglers und dem Anschluß DF liegt noch eine Diode D1. Die Schaltungsblöcke 14, 15, 16 können als Mikroprozessor ausgestaltet sein und Bestandteil des Steuerteils des Spannungsreglers 13 sein.

Als weiterer Bestandteil des Drehstromgenerators 10 liegt ein Kondensator C1 zwischen den Kathoden der Zenerdioden Z1, Z2, Z3 und Masse. Ein zusätzlicher Anschluß W kann vorhanden sein, er steht dann mit der Phasenwicklung W in Verbindung und liefert die Phasenspannung UP.

Vom Fahrzeugbordnetz ist die Batterie 17 dargestellt, deren Pluspol mit der Generatorklemme B+ in Verbindung steht und deren Minuspol auf Masse liegt. Der Pluspol der Batterie 17 ist weiterhin mit Klemme KL30 verbunden, diese führt über den Zündschalter 18 zur Klemme KL15 und damit zum Starter 19. Die Verbraucher sind mit 20 bezeichnet, sie können über Schaltmittel 21 mit dem Pluspol der Batterie 17 verbunden werden.

Als Ergänzung zum Bordnetz kann von Klemme KL15 eine Verbindung zur Ladekontrollampe 22 geführt sein, die über eine Lampen-/Relais-Steuerung 23 auf Masse geführt wird. Die Lampen-/Relais-Steuerung 23 steht ferner mit der Klemme KL15 in Verbindung und weist einen Steuereingang SE auf, über den Steuersignale zuführbar sind. Parallel zur Lampen-/Relais-Steuerung 23 liegt ein Relais 24.

Die in der Figur dargestellte Vorrichtung zur Erzeugung einer geregelten Ausgangsspannung für ein Fahrzeugbordnetz hat zwischen dem Generator 10 und dem Bordnetz nur zwei Verbindungen, nämlich den Anschluß B+, an dem die geregelte und gleichgerichtete Ausgangsspannung UG des Generators 10 zur Versorgung des Bordnetzes abgegriffen wird sowie der gemeinsame Masseanschluß D-. Der bei herkömmlichen Bordnetzen vorhandene Anschluß D+ entfällt. Die Spannungsversorgung für die Erregerwicklung E beziehungsweise die Spannung zur Erzeugung des Erregerstromes IE wird generatorintern über Klemme B+ abgegriffen. Die Verbindung zwischen der Erregerwicklung und Masse wird mit Hilfe des Transistors T hergestellt, sofern der Basis des Transistors T ein entsprechendes Ansteuersignal zugeführt wird. Bei stehendem Generator sperrt der Transistor T und es fließt kein Erregerstrom. Erfolgt ein Start der Brennkraftmaschine, beginnt der Generator sich zu drehen und es wird ein Erregerstrom benötigt. Dieser Strom für die Vorerregung wird direkt vom Anschluß B+ geliefert, sobald der Spannungsregler den Start der Brennkraftmaschine erkennt. Für die Starterkennung sind verschiedene Varianten möglich, die im folgenden beschrieben werden:

Für die Starterkennung kann beispielsweise die während des Startvorganges auftretenden Beschleunigungen mit Hilfe eines Beschleunigungssensors S registriert. Dieser Beschleunigungssensor wird an einer Stelle der Brennkraftmaschine angebracht, bei der besonders hohe Beschleunigungswerte auftreten. Das Ausgangssignal des Beschleunigungssensors wird dem Block 15 des Spannungsreglers zugeführt. Es ist beispielsweise eine Spannung oder wird zu einer Spannung aufbereitet, die als Sensorspannung US bezeichnet ist und auf die Basis des Transistors T des Spannungsreglers geführt wird und diesen einschaltet. Der Beschleunigungssensor kann auch im Spannungsregler integriert sein

in einem weiteren Beispiel wird die Amplitude der über den Restmagnetismus induzierten Phasenspannung UP ausgewertet Diese Phasenspannung wird beispielsweise an der Phase V abgegriffen und der Schaltung 14 zugeführt. Erreicht die Amplitude der Phasenspannung einen Grenzwert, wird der Transistor T des Spannungsreglers 13 angesteuert und der Erregerstrom eingeschaltet. Da die Phasenspannung bzw. das Phasensignal im Regler bereits vorhanden ist, werden keine zusätzlichen Leitungen/Anschlüsse benötigt.

Es ist auch möglich, die Frequenz der Phasenspannung auszuwerten. Die Frequenz der über den Restmagnetismus induzierten Phasenspannung ist von der Drehzahl des Generators abhängig. Durch Auswertung dieser Frequenz kann somit die Drehzahl ermittelt werden und mit einem vorgebbaren Schwellwert verglichen werden. Überschreitet die Frequenz der Phasenspannung diesen Grenzwert, wird in der Schaltung 14 eine Spannung erzeugt, die Basis des Transistors T zugeführt wird und diesen in leitenden Zustand versetzt.

Erfindungsgemäß wird der Spannungsverlauf an der Klemme B+ ausgewertet. Der Verlauf dieser Spannung während des Startvorgangs weist einige charakteristische Maxima und Minima auf. Wird der erwartete Spannungsverlauf erkannt, muß ein Startvorgang erfolgt sein. Die Erkennung des zu erwartenden Spannungsverlaufs wird ebenfalls in der Schaltungsanordnung 14 durchgeführt. Ist ein Start erkannt, erfolgt wiederum eine Ansteuerung des Transistors T und der Erregerstrom IE wird eingeschaltet.

Die bisher beschriebenen verschiedenen Beispiele zur Starterkennung dienen alle dazu, daß unmittelbar nach dem Start der Brennkraftmaschine ein ausreichender Erregerstrom IE durch den Erreger E fließt Nachdem der Generator 10 den vollen Erregungszustand erreicht hat, muß eine Begrenzung des Erregerstromes erfolgen, damit die Ausgangsspannung UG des Generators den gewünschten Wert nicht überschreitet Der Spannungsregler geht dann vom Vorerregungs-Bitriebszustand in den normalen Regelbetrieb über. Die Umschaltung von der Vorerregung auf den normalen Regelbetrieb erfolgt beispielsweise über die Auswertung des Phasensignales. Wie bereits in der Beschreibung des Beispiels 2 oder 3 ausgeführt wird, ist sowohl die Amplitude der Phasenspannung als auch die Frequenz der Phasenspannung von der Drehzahl des Generators abhängig. Die Auswertung des Phasensignals ermöglicht daher eine Drehzahlbestimmung. Erreicht die aus dem Phasensignal ermittelte Drehzahl einen weiteren Schwellwert, der höher liegt als der für die Einschaltung des Erregerstromes verwendete Schwellwert, wird dies vom Regler 13 registriert und der Regler 13 geht in den normalen Regelzustand über, bei dem der Transistor T den Erregerstrom IE so regelt, daß eine konstante Ausgangsspannung UG an der Generatorklemme B+ entsteht.

Beim Abschalten der Brennkraftmaschine wird der Antrieb des Generators beendet und die Generatordrehzahl fällt ab. Es erfolgt dann ein Übergang in den Ruhezustand mit minimaler Erregerstromaufnahme. Dazu wird eines der beiden Kriterien Phasenspannung UP <1V, entsprechend einer Drehzahl gegen Null oder Beschleunigungssensor inaktiv ausgewertet. Ist die Phasenspannung UP <1V oder der Beschleunigungssensor inaktiv, wird auf Motorstillstand erkannt und der Erregerstrom abgeschaltet, indem der Transistor T in seinen sperrenden Zustand geschaltet wird.

Damit das Phasensignal insbesondere während der Startphase verstärkt wird, kann der Läufer des Generators zusätzlich mit Magneten versehen werden, wie sie beispielsweise zur Streuflußkompensation bereits üblich sind.

Wird der Generatorstrom infolge von Störungen oder sonstigen Fehlern irrtümlich bei stehendem Motor eingeschaltet, kann durch ein Zeitglied, das z.B. in den Spannungsregler integriert ist, nach einigen Sekunden der Erregerstrom wieder abgeschaltet werden. Die Erkennung des stehenden Motors ist möglich, da das Phasensignal ausbleibt beziehungsweise keine Phasenspannung erzeugt wird. Das ausbleibende Phasensignal wird in der Schaltungsanordnung 14 registriert. Es wird dann das Zeitglied eingeschaltet, das nach einer gewissen Zeit den Transistor T in sperrenden Zustand schaltet. Damit wird vermieden, daß der Erregerstrom die Batterie entlädt.

Wird in einer erweiterten Reglerversion die Generatorausgangsspannung UG in Abhängigkeit von der Batteriespannung oder der Batterietemperatur geregelt, muß die entsprechende Information über Batteriespannung und/oder Batterietemperatur vorhanden sein, bei herkömmlichen Spannungsreglern wird diese Information über zusätzliche Klemmen zugeführt. Auf diese zusätzlichen Klemmen kann jedoch verzichtet werden, wenn die Batteriespannung und/oder Batterietemperatur im Regler aus ohnehin vorhandenen Daten berechnet beziehungsweise simuliert wird. Diese Simulation kann in einer Auswerteeinrichtung des Reglers 13 durchgeführt werden, die beispielsweise als Mikroprozessor ausgestaltet ist. Sie kann unter Berücksichtigung der im Spannungsregler ohnehin vorhandenen Sensorinformationen erfolgen. Die Simulation kann im übrigen fahrzeugtypabhängig erfolgen und beispielsweise als Bandende-Programmierung durchgeführt werden. Dabei wird der Regler nicht während der Fertigung, sondern erst nach Zusammenbau mit dem Generator oder erst nach Einbau ins Fahrzeug programmiert oder abgeglichen werden.

Durch Auswertung des an der Klemme DF anstehenden DF-Signales, das das Tastverhältnis EIN/AUS des Reglers anzeigt, kann ein Maß für die Höhe des Erregerstromes IE gewonnen werden. Damit kann die Generatorauslastung erkannt werden, wobei zu berücksichtigen ist, daß zwischen der Höhe des Erregerstromes und des Generatorstromes kein linearer Zusammenhang besteht.

Der Anschluß DF zwischen dem Spannungsregler 13 und dem Bürstenhalter 12 muß nicht als eigener Anschluß nach außen geführt werden, da im Bordnetz Verbraucher vorhanden sind, die nur bei Leistungsreserve im Bordnetz zugeschaltet werden sollen, kann eine Auswertung der Versorgungsspannung UG durchgeführt werden zur Erkennung, ob noch eine Energiereserve vorhanden ist oder nicht. Eine hohe Versorgungsspannung deutet darauf hin, daß diese Reserve noch vorhanden ist und die Verbraucher zugeschaltet werden können, eine niedrige Versorgungsspannung bedeutet, daß keine Reserve mehr vorhanden ist und die Verbraucher abgeschaltet werden sollten.

Da das beschriebene Spannungsversorgungssystem keinerlei Steuerleitungen benötigt, sind weniger Anschlüsse vorhanden, die mit einer Schutzbeschaltung versehen werden müssen. Insgesamt wird der Regler unempfindlich gegen elektromagnetische Einstreuungen. Die EMV ist also gegenüber herkömmlichen Systemen verbessert.

Die beschriebene Vorrichtung zur Erzeugung einer geregelten Spannung ermöglicht Verfahren zur Spannungsregelung, die den Erfordernissen in einem Fahrzeugbordnetz optimal angepaßt werden können.

## Patentansprüche

1. Vorrichtung zur Erzeugung einer geregelten Spannung, mit einem von einer Brennkraftmaschine angetriebenen Generator, der eine Erregerwicklung und ein Gleichrichtersystem umfasst und über einen ersten Anschluss (B+), an dem die gleichgerichtete, geregelte Generatorspannung (UG) entsteht und die Generatorspannung (UG) zur Versorgung eines Bordnetzes dient und der erste Anschluss (B+) des Generators (10) mit der Erregerwicklung (E) in Verbindung steht und der Stromfluss (IE) durch die Erregerwicklung (E) mittels eines Schaltmittels (T) beeinflussbar ist, wobei dem Schaltmittel (T) ein Signal (US) zuführbar ist, das von der Drehzahl des Generators abhängt und das Signal (US) in einer Schaltungsanordnung (14), die Bestandteil eines Spannungsreglers (13) ist, in Abhängigkeit von Verlauf der Bordnetzspannung an der Anschluss (B+), erzeugt wird, wobei der Start der Brennkraftmaschine und damit der Beginn der Drehung des Generators (10) durch Auswertung des Signals (US) erkannt wird bei erkanntem Start die Verbindung der Erregerwicklung (E) mit dem Anschluss (B+) durch entsprechende Ansteuerung des Schaltmittels (T) hergestellt wird, wodurch der Stromfluss durch die Erregerwicklung (E) durch Einschalten des Schaltmittels (T) ausgelöst wird, **dadurch gekennzeichnet, dass** der Generator (10) über einen zweiten Anschluss, der der gemeinsame Masseanschluss ist (D-), mit dem Spannungsregler (13) in Verbindung steht und der Startvorgang durch einen Vergleich zwischen dem Spannungsverlauf an Klemme (B+) und einen erwarteten Spannungsverlauf erkannt wird, durch Erkennen von charakteristische Maxima und Minima.

2. Vorrichtung nach Anspruch 1, **dadurch gekennzeichnet, dass** das Schaltmittel (T) ein Transistor ist, insbesondere der im Spannungsregler (13) vorhandene Regeltransistor.

3. Vorrichtung nach einem der vorhergehenden Ansprüche, **dadurch gekennzeichnet, dass** im Spannungsregler Mittel vorhanden sind, insbesondere ein Mikroprozessor, der für die Regelung benötigte Größe wie Batteriespannung oder Batterietemperatur simuliert, wobei die Simulation in Abhängigkeit von im Regler gemessenen Größen erfolgt und/oder in Abhängigkeit vom Fahrzeugtyp erfolgt.

4. Vorrichtung nach einem der vorhergehenden Ansprüche, **dadurch gekennzeichnet, dass** die Belastung des Generators durch Auswertung des Tastverhältnisses (EIN/AUS) des Spannungsreglers ermittelt wird.

## Claims

1. Apparatus for generating a regulated voltage, having a generator, which is driven by an internal combustion engine, comprises a field winding and a rectifier system and is connected to a voltage regulator (13) via a first terminal (B+) at which the rectified, regulated generator voltage (UG) is produced, the generator voltage (UG) serving the purpose of supplying power to a vehicle power supply system, and the first terminal (B+) of the generator (10) being connected to the field winding (E), and it being possible for the flow of current (IE) through the field winding (E) to be influenced by means of a switching means (T), it being possible for a signal (US), which depends on the rotational speed of the generator, to be fed to the switching means (T), and the signal (US) in a circuit arrangement (14), which is part of a voltage regulator (13), being generated as a function of the profile of the vehicle power supply voltage at the terminal (B+), the starting of the internal combustion engine and thus the point at which rotation of the generator (10) begins being identified by evaluating the signal (US), and when starting has been identified, the connection between the field winding (E) and the first terminal (B+) being produced by correspondingly driving the switching means (T), as a result of which the flow of current through the field winding (E) is triggered by the switching means (T) being closed, **characterized in that** the generator (10) is connected via a second terminal, which is the common earth terminal (D-), to a voltage regulator (13), and the starting operation is identified by a comparison between the voltage profile at terminal (B+) and an expected voltage profile, by identification of characteristic maxima and minima.

2. Apparatus according to Claim 1, **characterized in that** the switching means (T) is a transistor, in particular the regulating transistor provided in the voltage regulator (13).

3. Apparatus according to one of the preceding claims, **characterized in that** means, in particular a microprocessor, are provided in the voltage regulator and simulate variables required for the regulation, such as battery voltage or battery temperature, the simulation being carried out as a function of variables measured in the regulator and/or as a function of the type of vehicle.

4. Apparatus according to one of the preceding claims, **characterized in that** the load on the generator is determined by evaluating the duty ratio (ON/OFF) of the voltage regulator.

## Revendications

1. Dispositif pour générer une tension régulée comprenant un générateur entraîné par un moteur à combustion interne, et ayant un enroulement d'excitation et un système redresseur et relié à un régulateur de tension (13) par une première borne (B+) fournissant la tension de générateur, régulée, redressée (UG), cette tension de générateur (UG) alimentant le réseau embarqué et la première borne (B+) du générateur (10) est reliée à l'enroulement d'excitation (E) et le passage du courant (IE) est influencé par l'enroulement d'excitation (E) à l'aide d'un moyen de commutation (T),
le moyen de commutation (T) recevant un signal (US) dépendant de la vitesse de rotation du générateur et le signal (US) est généré par un dispositif de commutation (14) faisant partie d'un régulateur de tension (13), en fonction de l'évolution de la tension du réseau embarqué sur la borne (B+),
le démarrage du moteur à combustion interne et ainsi le début de la rotation du générateur (10) étant détectés par l'exploitation du signal (US) et lorsque le démarrage est détecté, l'enroulement d'excitation (E) est relié à la borne (B+) par une commande correspondante du moyen de commutation (T),
le passage du courant à travers l'enroulement d'excitation (E) étant déclenché par le branchement du moyen de commutation (T),
**caractérisé en ce que**
le générateur (10) est relié par une seconde borne qui est la borne de masse commune (D-), au régulateur de tension (13) et l'opération de démarrage se détecte en comparant la courbe de tension sur la borne (B+) et une courbe de tension prévisible, en détectant les maxima et minima caractéristiques.

2. Dispositif selon la revendication 1,
**caractérisé en ce que**
le moyen de commutation (T) est un transistor notamment le transistor de régulation du régulateur de tension (13).

3. Dispositif selon les revendications précédentes,
**caractérisé en ce que**
le régulateur de tension comporte des moyens notamment un microprocesseur simulant la grandeur nécessaire à la régulation telle que la tension de batterie ou la température de batterie, la simulation se faisant en fonction des grandeurs mesurées dans le régulateur et/ou en fonction du type de véhicule.

4. Dispositif selon les revendications précédentes,
**caractérisé en ce que**
la sollicitation du générateur se détermine par l'exploitation du rapport de travail (marche/arrêt) du régulateur de tension.
